# EUROPEAN PATENT APPLICATION

(11) **EP 4 838 469 A1**
(43) Date of publication of application: **11.11.2026**
(21) Application number: 26176595.2
(22) Date of filing: 05.05.2026
(51) Int. Cl.: G06T 7/70, G06T 7/80

(54) **A VEHICLE IMAGING DEVICE CALIBRATION SYSTEM**

(30) Priority: 05.05.2025 GB 202506817
(71) Applicant: AUMOVIO Germany GmbH, 60488 Frankfurt am Main (DE)
(72) Inventor: Tong, Siew Wen, 339780 Singapore (SG); Hui, Yau Wai Lucas, 339780 Singapore (SG)
(74) Representative: Aumovio Corporation

(57) **Abstract**

Disclosed is a a vehicle imaging device calibration system is provided. The vehicle operator imaging device calibration system comprises an imaging device operable to capture images of a vehicle operator and a processing unit having a memory. The memory is operable to retrieve a set of instructions stored thereon for execution. The imaging device is mounted on at least a portion of a steering wheel column. The processing unit is operable to compute an extrinsic parameter between the imaging device and at least one fixed point of a motor vehicle aligned with at least one physical feature of a vehicle operator. The extrinsic parameter is computed when position of the imaging device changes in response to movement of the steering wheel column moving in an up-down and/or inward-outward direction when vehicle is in operation The processing unit is operable to determine a head pose of the vehicle operator with respect to a global coordinates system, thereby detecting a head position of the vehicle operator. A method of calibrating an imaging device coordinates system with a global coordinates system is also provided.

## Description

### TECHNICAL FIELD

This disclosure relates to a camera calibration method, specifically an automated calibration method for vehicle onboard cameras.

### BACKGROUND

Driver monitoring systems in automotive industry is often used to monitor status of a driver for safety reasons, as such, an onboard camera to capture a field of view of the driver is necessary. Placement of onboard cameras are usually mounted on a central rearview mirror or areas of a cockpit, to ensure a camera field of view cover features of the driver.

Placement of onboard camera on a steering wheel column has an advantage of capturing a full view of facial features of the driver. However, steering wheel column is often made adjustable for driver according to driver's height or sitting position. Consequently, the position and orientation of the field of view of the camera changes, and hence the driver monitoring system will not be able to capture images of the driver to accurately determine the exact position and orientation of driver with reference to a vehicle.

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

A purpose of this disclosure is to ameliorate the problem as discussed in the background section, by providing the subject-matter of the independent claims.

Further purposes of this disclosure are set out in the accompanying dependent claims.

In an aspect of this disclosure, a vehicle imaging device calibration system is provided. The vehicle imaging device calibration system comprises an imaging device operable to capture images of a vehicle operator and a processing unit having a memory. The memory is operable to retrieve a set of instructions stored thereon for execution. The imaging device is mounted on at least a portion of a steering wheel column. The processing unit is operable to compute an extrinsic parameter between the imaging device and at least one fixed point of a motor vehicle aligned with at least one physical feature of a vehicle operator. The extrinsic parameter is computed when position of the imaging device changes in response to movement of the steering wheel column moving in an up-down and/or inward-outward direction when vehicle is in operation The processing unit is operable to determine a head coordinate of the vehicle operator with respect to a global coordinates system, thereby detecting a head position of the vehicle operator.

Advantageously, the aforesaid system detects the driver's position based on an extrinsic parameter computed when a position of the steering wheel column changes, thereby determining a head pose to detect a head position of the driver with respect to a global coordinate system, of which the global coordinate system corresponds to a set of coordinates of an interior of a passenger compartment of a motor vehicle. In other words, the imaging device x position, yaw and roll angle in the global coordinate system is determined, to detect head position of the vehicle operator seated within the interior of the passenger compartment. Beneficially, detection of a head position of the driver with respect to the coordinates of an interior of a passenger compartment when the steering wheel column is adjusted assist to improve or enhance other vehicular subsystems within a motor vehicle which is dependent on head position of driver, or gaze direction of driver. Henceforth, the vehicle operator's head position detected may be transmitted to other vehicular subsystems, such as eye-gaze direction of driver for vehicular display systems, or deployment of airbag in the event of vehicle collision, to prevent injuring the vehicle operator during airbag deployment.

In some embodiment, the system comprises a sensor mounted on the steering wheel column. The sensor may be operable to obtain a measurement of the camera pitch of the imaging device. Therefore, when the camera pitch of the imaging device changes in response to a change in position of the steering wheel column, the camera pitch measured may be input to the processing unit.

In some embodiment, the processing unit may be operable to compute the camera position of the imaging device relative to at least two fixed points of the motor vehicle. In such embodiment, the camera position of the imaging device may be computed using a triangulation of two fixed points such as a central rearview mirror and a side rearview mirror relative to a position of the vehicle operator and/or vehicle operator's seat.

In some embodiment, the processing unit is operable to determine the camera position of the imaging device according to an output result to identify a head position of the vehicle operator.

In some embodiment, the head pose to detect the head position of the vehicle operator comprises a head orientation of the head position of the vehicle operator with reference to an imaging device coordinate system.

The head orientation may comprise a head yaw of the vehicle operator relative to the at least one fixed point; a head pitch of the vehicle operator relative to at least one fixed point; a gaze yaw of the vehicle operator relative to the at least one fixed point; a gaze pitch of the vehicle operator relative to at least one fixed point, or combination thereof.

In some embodiment, the processing unit may be operable to retrieve one or more historical images captured by the imaging device and execute a first set of instructions stored thereon to analyse the head pose information of the vehicle operator relative to the at least one fixed point of the motor vehicle using the one or more historical images retrieved.

In some embodiment, the system may comprise an audio device operable to execute an audible instruction based on a command executed by the processing unit.

In some embodiment, the audible instruction may comprise a sequence of instructions to align the head pose of the vehicle operator to the at least one fixed point of the motor vehicle.

In some embodiment, the processing unit may be operable to retrieve one or more historical images captured by the imaging device and execute a second set of instructions stored thereon to generate an average value of a yaw and pitch range of the head orientation of the vehicle operator, relative to the at least one fixed point of the motor vehicle.

In most embodiment, the at least one fixed point may be selected from a group consisting of a side mirror; a rearview mirror, and combination thereof.

In a second aspect of this disclosure, a method of detecting a head position of a vehicle operator is provided. The method comprises the steps of (a) aligning at least one physical feature of a vehicle operator to at least one fixed point of a motor vehicle; (b) detecting a change in a position of an imaging device mounted on at least a portion of a steering wheel column; (c) computing, by way of a processing unit, an extrinsic parameter between the imaging device and the at least one fixed point of the motor vehicle aligned with the at least one physical feature of the vehicle operator; and (d) determining, by way of the processing unit, a head pose of the vehicle operator with respect to a global coordinates system, thereby detecting a head position of the vehicle operator.

Advantageously, the aforesaid method detects the driver's position based on an extrinsic parameter computed when a position of the steering wheel column changes, thereby determining a head pose to detect a head position of the driver with respect to a global coordinate system, of which the global coordinate system corresponds to a set of coordinates of an interior of a passenger compartment of a motor vehicle. In other words, the imaging device x position, yaw and roll angle in the global coordinate system is determined, to detect head position of the vehicle operator seated within the interior of the passenger compartment. Beneficially, detection of a head position of the driver with respect to the coordinates of an interior of a passenger compartment when the steering wheel column is adjusted assist to improve or enhance other vehicular subsystems within a motor vehicle which is dependent on head position of driver, or gaze direction of driver. Accordingly, the vehicle operator's head position detected may be transmitted to other vehicular subsystems, such as eye-gaze direction of driver for vehicular display systems, or deployment of airbag in the event of vehicle collision, to prevent injuring the vehicle operator during airbag deployment.

Other objects, features and characteristics, as well as the methods of operation and the functions of the related elements of the structure, the combination of parts and economics of manufacture will become more apparent upon consideration of the following detailed description and appended claims with reference to the accompanying drawings, all of which form a part of this specification. It should be understood that the detailed description and specific examples, while indicating the non-limiting embodiments of the disclosure, are intended for purposes of illustration only and are not intended to limit the scope of the disclosure.

### DESCRIPTION OF DRAWINGS

The present disclosure will become more fully understood from the detailed description and the accompanying drawings, wherein:
FIG. 1 shows a schematic diagram of a vehicle imaging device calibration system in accordance with an embodiment.
FIG. 2a - 2e shows various views of a triangulation between a vehicle operator and at least one fixed point of a motor vehicle.
FIG. 3 shows a flowchart of a calibrating a vehicle imaging device in accordance with an embodiment.

It should be understood that like reference numerals identify corresponding or similar elements throughout the several drawings. It should be understood that although a particular component arrangement is disclosed and illustrated in these exemplary embodiments, other arrangements could also benefit from the teachings of this disclosure.

### DETAILED DESCRIPTION OF EMBODIMENT

The following detailed description is merely exemplary in nature and is not intended to limit the disclosure or the application and uses of the disclosure. Furthermore, there is no intention to be bound by any theory presented in the preceding background of the disclosure or the following detailed description. It is the intent of this disclosure to present a vehicle imaging device calibration system operable to compute a set of imaging device extrinsic parameters using triangulation between a head position and/or gaze direction of a vehicle operator determined by said imaging device and at least one fixed point of a motor vehicle.

Hereinafter, the term "processor "may comprise one or more computer-readable storage media or memory modules, which may comprise transitory and non-transitory memory. The computer-readable storage media may encompass any electronic component capable of storing electronic information. The computer-readable storage media or memory may include transitory computer-readable media such as random-access memory (RAM) or cache memory. The computer-readable storage media or memory may include non-transitory computer-readable media such as read-only memory (ROM), non-volatile random-access memory (NVRAM), programmable read-only memory (PROM), erasable programmable read only memory (EPROM), electrically erasable PROM (EEPROM), flash memory, magnetic or optical data storage, registers, etc. The memory is in electronic communication with a processor as disclosed herein and/or other processors of the processor. Computer-readable instructions, such as an operating system, middleware, firmware or other software framework, may reside in the non-transitory computer-readable storage medium. Computer-readable instructions may be implemented as a program or a code that can be read by the processor. The disclosed method may be implemented as a program or a code that can be read by the processor of the unmanned moving object. Accordingly, in an embodiment, there is provided a processor of an unmanned moving object operable to perform the method as disclosed herein. Exemplary processor(s) of the processor include a central processing unit (CPU), a microprocessor, a digital signal processor (DSP), a controller, a microcontroller, a state machine, programmable gate arrays, systems-on-chip (SoC), programmable SoCs, or other suitable devices. The term "processor" may include a combination of processing devices, e.g., a combination of a DSP and a microprocessor, a plurality of microprocessors, one or more microprocessors in conjunction with a DSP core, or any other such configuration suitable for the disclosed processor.

The term "first", "second", "third" and the like used in the context of this disclosure may refer to modification of different elements in accordance with various exemplary embodiments, but not limited thereto. The expressions may be used to distinguish one element from another element, regardless of sequence of importance. By way of an example, "a first fixed point" and "a second fixed point" may indicate different fixed point of a motor vehicle regardless of order or importance. Similarly, the expression "a first set of instruction" and "a second set of instruction" may refer to different set of instructions stored in a memory of a processing unit to distinguish one set of instructions from another set of instructions regardless of sequence of importance.

The term "coordinates" used herein refers to a set of numbers used to determine a position of a point or a shape in a 3-dimensional (3D) space, measured in accordance with x-axis, y-axis and z-axis. Henceforth, used in the context herein, the term "head coordinate of a vehicle operator" refers to a set of coordinates representing a head position of a vehicle operator, and the term "global coordinates" shall refer to a global space or area captured by a field of view (FOV) of an imaging device. In the context of driver monitoring systems, the term "global coordinate" may refer to an interior of a passenger compartment of a motor vehicle, since the imaging device captures a FOV of at least a part of the interior of the passenger compartment.

Henceforth, In the context herein, the term "head pose" refers to a head position and a head orientation of a head of a vehicle operator. The term "head position" refers to a 3D coordinates which includes an x-axis, y-axis and z-axis of a head of a vehicle operator in a 3D space, of which a 3D space may be an interior of a passenger cabin of a motor vehicle. The term "head orientation" used in the context herein may refer to a yaw, pitch and roll angles of a vehicle operator's head. Henceforth, the term "head pose" may refer to include a set of coordinates which measures a value for determining a head position and head orientation of a vehicle operator. On the same note, the term "camera position" shall refer to a set of coordinates representative of a measurement of an x-axis, y-axis and z-axis of a camera or imaging device, including a pitch angle of the camera.

### System 100

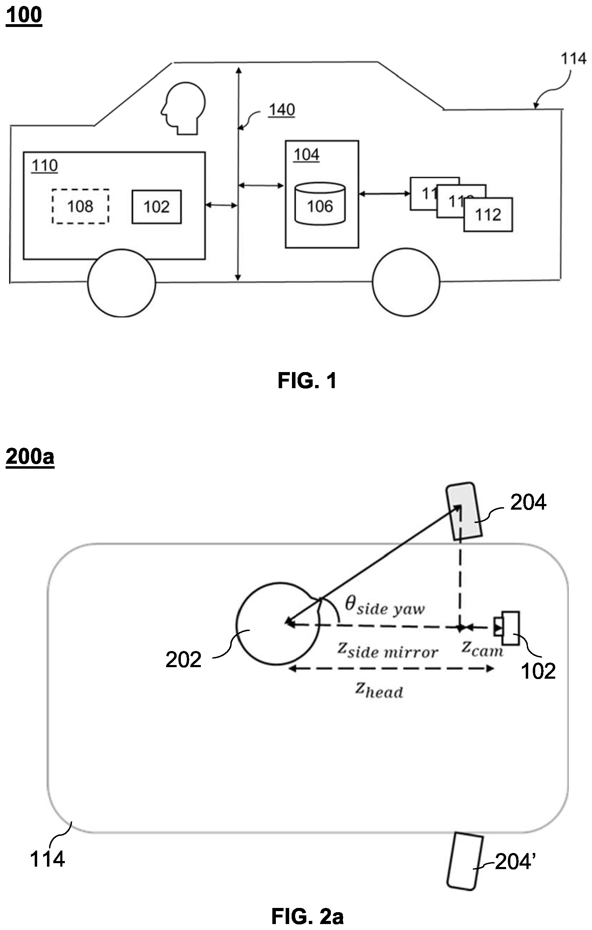

Referring to FIG. 1 of the accompanying drawings which shows a schematic diagram of a vehicle imaging device calibration system 100, the system 100 includes an imaging device 102 and a processing unit 104. The imaging device 102 is operable to capture images of a vehicle operator. In some embodiment, the imaging device 102 is a standalone electronic device. In some embodiment, the imaging device 102 may be part of a driver monitoring system. The processing unit 104 includes a memory 106. The memory 106 is operable to store information in the memory 106. Further, the memory 106 is operable to retrieve a set of instructions stored thereon for execution. The processing unit 104 is operable to compute a set of extrinsic parameters between the imaging device 102 and at least one fixed point of a motor vehicle. In most embodiment, the imaging device 102 may be mounted on at least a portion of the movable steering wheel column 110 of a motor vehicle 114. Using the set of extrinsic parameters, the imaging device together with the processing unit is able to determine the position of the vehicle operator with reference to the motor vehicle.

A main concept of this invention is to apply trigonometry and/or triangulation methodology to determine an extrinsic parameter or a distance between the imaging device 102 and at least one fixed point of the motor vehicle to determine a head coordinate of the vehicle operator in response to a change in a position of the imaging device mounted on at least a portion of a steering wheel column 110, with respect to a global coordinates system, i.e. an interior of a passenger compartment of a motor vehicle, thereby detecting a head position of the vehicle operator when a position of the imaging device 102 changes due to movement of steering wheel column 110 in an up-down or inward-outward direction.

For the system 100 to determine a change in camera pitch of the imaging device 102 in response to movement of the steering wheel column 110, a sensor 108 may be used to determine the camera pitch. The sensor 108 may be mounted on the steering wheel to obtain a measurement of the camera pitch of the imaging device 102 at the same time as the steering wheel column 110 changes position. An example of a suitable type of sensor for measuring the camera pitch may be aa three-axis accelerometer or an inertial measurement unit (IMU) sensor, but not limited thereto.

In the alternative, determination of camera pitch may be done using the processing unit 104, without a sensor, by determining whether the vehicle operator is looking at the at least one fixed point of the motor vehicle 114. In some embodiment, the at least one fixed point of the motor vehicle may be a side rearview mirror mounted on a body of a motor vehicle. In some embodiment, the at least one fixed point of the motor vehicle may be a central rearview mirror 204" located within a passenger compartment of a motor vehicle.

In one embodiment, the processing unit 104 performs statistical analysis to filter out instances where the driver is looking at the fixed point 204, 204' or 204". When motor vehicle is in operation, a motor vehicle operator periodically checks rearview mirror while operating the motor vehicle due to safety reasons. Henceforth, applying statistical analysis to determine a frequency of the vehicle operator looking in a direction within a yaw and pitch range defined by an area relative to the position of the imaging device 102 enables computation of an average value of the rear mirror checking events. The computation of the average value of a yaw and pitch range of the head position of the vehicle operator may be a second set of instructions different from the first set of instructions, of which the second set of instructions is stored and retrievable from the memory 106 of the processing unit 104, for purposes of generating an average value of a yaw and pitch range of the head position of the vehicle operator, relative to the at least one fixed point of the motor vehicle.

By way of example as shown in FIG. 2a of the accompanying drawings which shows a top view of a triangulation between a vehicle operator 202 and at least one fixed point 204, 204' of a motor vehicle, of which the at least one fixed point 204, 204' are taken as a first side rear view mirror 204 located on the left of the motor vehicle 114 and a second side rear mirror 204' located on the right side of the motor vehicle 114 the vehicle operator 202 aligns at least one physical feature with at least one fixed point 204, 204' of a motor vehicle. The head coordinates of the vehicle operator 202 relative to the at least one fixed point 202, 204' is input to the processing unit 104 for computation of a camera pitch of the imaging device 102 relative to the at least one fixed point 204, 204' of the motor vehicle. The head coordinates of the vehicle operator 202 may include a head yaw of the vehicle operator 202 relative to the at least one fixed point 204, 204', 204". In some embodiment, the pitch angle may include a head pitch of the vehicle operator 202 relative to at least one fixed point 204, 204', 204". In some embodiment, the pitch angle may include both the head yaw and the head pitch of the vehicle operator 202 relative to at least one fixed point 204, 204', 204".

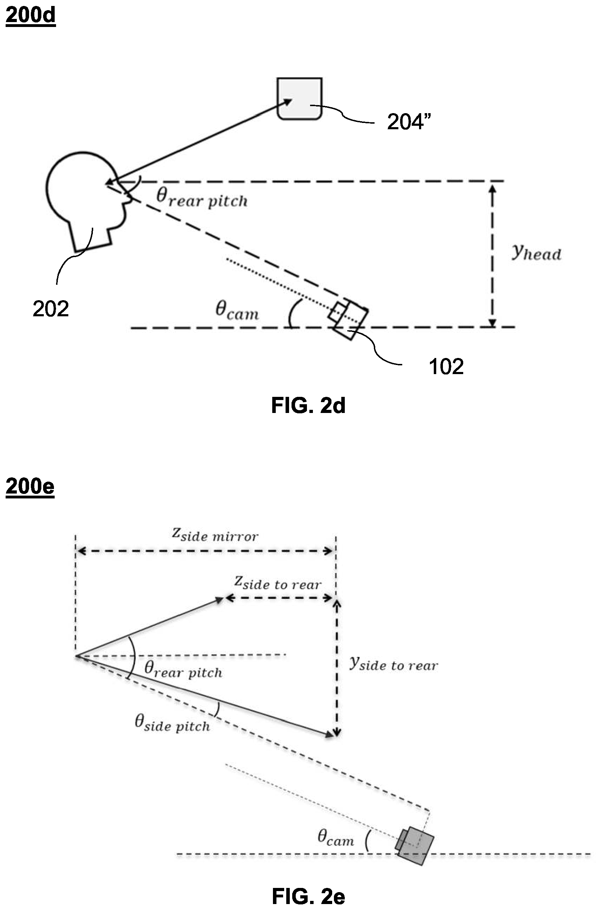

. To enable alignment of at least one physical feature of the vehicle operator 202 to at least one fixed point 204, 204', 204" (shown on FIG. 2d) of a motor vehicle 114, in some embodiment, the vehicle operator 202 may be instructed to face and look at the at least one fixed point 204, 204' through an audible instruction stored and retrievable from the memory 106 of the processing unit 104.

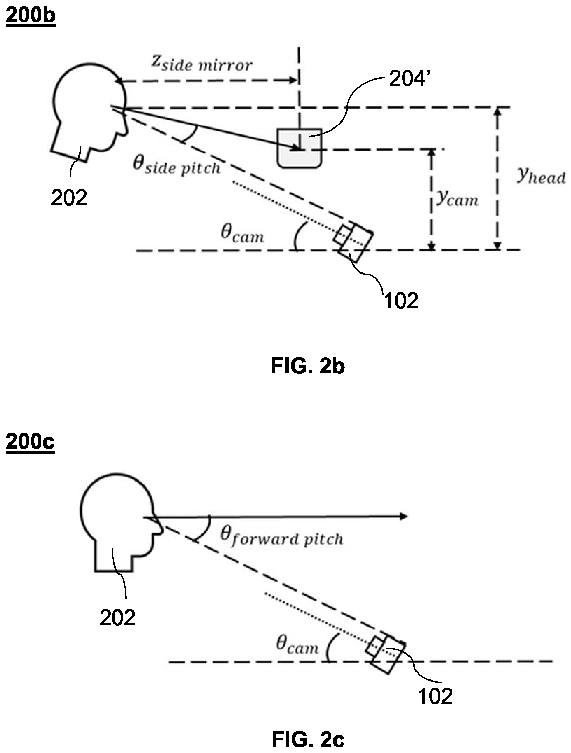

In some embodiment, the alignment of the at least one physical feature of the vehicle operator 202 to at least one fixed point 204, 204' of a motor vehicle 114 may be manually done by the vehicle operator 202, for example during routine checking of the at least one fixed point 204, 204', 204" while operating the motor vehicle 114. In such embodiments, the images captured by the imaging device 102 may be stored and retrieve from the memory 106 of the processing unit 104, such that statistical analysis may be executed to determine the average value of a head yaw position and a head pitch position of the vehicle operator 202, as explained above. The analysis of the images captured by imaging device 102 may include looking at right-side rearview mirror 204 as shown in FIG. 2a, looking at a left-side rearview mirror 204' as shown in FIG. 2b, looking forward at the road as shown in FIG. 2c and looking at the central rearview mirror 204" within a passenger compartment of the motor vehicle as shown in FIG. 2d.

Using FIG. 2a as an example, the extrinsic parameter or distance of between the imaging device 102 and the at least one fixed point 204 may be computed by the processing unit 104 using the following correlation of the respective parameters as follows:
In the global coordinates system z axis: $\begin{matrix}{z}_{cam} = {z}_{head} - {z}_{side mirror} \\ {z}_{cam} = {hp}_{z} {cosθ}_{cam} - \frac{{x}_{cam}}{tan \left({θ}_{side yaw}\right)}\end{matrix}$ Equation (1)
In the global coordinates system y axis: $\begin{matrix}{y}_{cam} = {y}_{head} - {y}_{side mirror} \\ {y}_{cam} = {hp}_{z} {sinθ}_{cam} - {z}_{side mirror} tan \left({θ}_{camera}-{θ}_{side pitch}\right)\end{matrix}$ Equation (2)
Wherein,
   - *x_{cam}* is the distance of the camera to the side mirror in the global y axis direction.
   - *y_{cam}* is the distance of the camera to the side mirror in the global y axis direction.
   - *z_{cam}* is the distance of the camera to the side mirror in the global z axis direction.
   - *y_{head}* is the distance of the head to the camera in the global y axis direction.
   - *z_{head}* is the distance of the head to the camera in the global z axis direction.
   - *y_{side mirror}* is the distance of the head to the side mirror in the global y axis direction.
   - *z_{side mirror}* is the distance of the head to the side mirror in the global z axis direction.
   - *θ_{cam}* is the camera pitch in the global axis.
   - *θ_{side yaw}* is head yaw looking at side mirror
   - *θ_{side pitch}* is head pitch looking at side mirror
   - *hpₓ* is the head position in the camera x axis direction
   - *hp_{y}* is the head position in the camera y axis direction
   - *hp_{z}* is the head position in the camera z axis direction

In various embodiments, a measurement of parameters *θside yaw, θside pitch, hpx, hpy* and *hpz* may be obtained from an output results 112 using a set of head pose estimation algorithms applied to images from imaging device 102. Henceforth, extrinsic parameter computed is used to transform head pose results from camera coordinate system to global coordinate system. In some embodiment, the output result, for example a head coordinates or head pose 112 may be generated by a driver monitoring system (not shown in drawings), and the output results 112 generated by the driver monitoring system.

The head pose 112 may contain information of a head orientation and a head position of the vehicle operator 202 with respect to the imaging device coordinates system. In some embodiment, the head orientation may include a head yaw of the vehicle operator 202 relative to the at least one fixed point 204, 204', 204". In some embodiment, the head orientation may include a head pitch of the vehicle operator 202 relative to at least one fixed point 204, 204', 204". In some embodiment, the head orientation may include both the head yaw and the head pitch of the vehicle operator 202 relative to at least one fixed point 204, 204', 204".

The computation as represented by Equation (1) and Equation (2) may be utilized in several embodiments. The first embodiment comprises the step of measuring the camera pitch angle (*θ_{cam}*) using a sensor 108..

In alternate embodiment where centre of the head of the vehicle operator 202 does not intersects with the imaging device 102, hence *hpₓ* ≠ 0 and/or *hp_{y}* ≠ 0, imaging device 102 positions may be computed using Equation (3) and Equation (4). ${z}_{cam} = \left({hp}_{z}{cosθ}_{cam}-{hp}_{y}{sinθ}_{cam}\right) - \frac{{x}_{cam} - {hp}_{x}}{tan \left({θ}_{side yaw}\right)}$ Equation (3) ${y}_{cam} = \left({hp}_{z}{sinθ}_{cam}+{hp}_{y}{cosθ}_{cam}\right) - {z}_{side mirror} tan \left({θ}_{camera}-{θ}_{side pitch}\right)$ Equation (4)

In embodiments not using sensor 108 as a mode of measuring changes to the camera pitch of the imaging device 102 when the steering wheel column 110 changes a position, the pitch angle of the vehicle operator may be determined by applying parallel lines angle rules, where the pitch angle looking forward and the camera pitch are taken as alternative angles (*θ_{cam} = θ_{forward pitch}*), as shown in FIG. 2c. Hence, the pitch angle and the camera angle are assumed equal. In some embodiment, to obtain the pitch angle, the processing unit 104 may execute an audible instruction requesting the vehicle operator to face forward. In some embodiment, statistical analysis may be executed by the processing unit 104 to retrieve one or more historical images captured by the imaging device 102 and further execute a first set of instructions to analyse pitch angle of the vehicle operator relative to the at least one fixed point of the motor vehicle using the one or more historical images retrieved. In such embodiments, the one or more historical images retrieved may be from the memory 106 of the processing unit 104, or from a memory of a driver monitoring system, of which the one or more historical images are transmitted to the processing unit 104. The imaging device 102 y and z position in the global coordinate can be computed using Equation 1 and 2, or using Equation 3 and 4, as explained above.

In some embodiments, determination of the camera pitch may be done with reference to at least two fixed points 204, 204', 204" instead of reference to at least one fixed point 204, 204', 204" of the motor vehicle 114. As shown in FIG. 2d, the vehicle operator 202 may look at a central rearview mirror 204". On the other hand, as shown in FIG. 2e, a simplified visualisation of the vehicle operator 202 looking at the at least two fixed points 204, 204', 204" of the motor vehicle 114 may be combined such that all the information of the vehicle operator 202 alignment of at least one physical feature with the at least one fixed point 204, 204', 204" may be received by the processing unit 104, for computation of the extrinsic parameter.

The camera pitch may be computed using the triangulation of the vehicle operator 202, the imaging device 102 and the at least two fixed point using following equation: $\begin{matrix}{y}_{side to rear} = {z}_{side mirror} tan \left({θ}_{rear pitch}-{θ}_{cam}\right) \\ + \left({z}_{side mirror}-{z}_{side to rear}\right) tan \left({θ}_{cam}-{θ}_{side pitch}\right)\end{matrix}$ Equation (5) Wherein:
- *z_{side mirror}* is the distance of the head to the side mirror in the global z axis direction.
- *y_{side to rear}* is the distance of side mirror to the rear mirror in the global y axis direction.
- *z_{side to rear}* is the distance of side mirror to the rear mirror in the global z axis direction.
- *θ_{cam}* is the camera pitch in the global axis.
- *θ_{side pitch}* is head pitch looking at side mirror (from the driver monitoring algorithm output).
- *θ_{rear pitch}* is head pitch looking at rear mirror (from the driver monitoring algorithm output).

In various embodiments, a measurement of parameters *θ_{side pitch}* and *θ_{rear pitch}* may be generated by the driver monitoring system which in turn transmit to the vehicle imaging device calibration system 100 through a vehicle network 140 for processing by processing unit 104.

In response to Equation (5) or the computation of *y_{side to rear},* a Tangent addition formula is applied for determination of camera pitch, *θ_{cam}*: ${θ}_{cam} = {tan}^{- 1} \left(\frac{- b \pm \sqrt{{b}^{2} - 4 ac}}{2 a}\right)$ Equation (6) wherein:
- *a* = *y_{side to rear}* tan (*θ_{rear pitch}*)tan (*θ_{side pitch}*)
- *b = y_{side to rear}* tan(*θ_{rear pitch}*) + *y_{side to rear} t*an(*θ_{sde pitch}*) *+ z_{side to rear}* tan(*θ_{rear pitch}*) *- z_{side mirror}* tan(*θ_{side pitch}*) *- z_{side mirror}* tan(*θ_{rear pitch}*)
- *c* = *y_{side to rear}* + *z_{side to rear} -* 2*z_{side mirror}*

It shall be understood application of Equation (6) may yield two solutions, but a valid camera pitch angle may be determined by applying knowledge of possible pitch angle range given the computed camera y and z position due to limitation of steering wheel column movements. The camera y and z position in the global coordinate can be computed using Equation 1 and 2, or using Equation 3 and 4, as explained above.

Thus, it can be seen, the global coordinate system needs to be mapped to the camera or imaging device coordinates system by taking into consideration of a change in a position of the imaging device mounted on at least a portion of a steering wheel column, to determine head pose of the vehicle operator, to achieve the objective of detecting a head position and head orientation of the vehicle operator. In this sense, the technical relationship between the global coordinates system, the extrinsic parameter computed, and the imaging device coordinates system may be represented by the following formula: $\begin{matrix}Vehicle _ Coordinates \\ = function \left(Extrinsic_Parameters,Camera_Coordinates\right)\end{matrix}$ Example ${\left[\begin{matrix}x \\ y \\ z\end{matrix}\right]}_{Vehicle} = {\left[\begin{matrix}{R}_{11} & {R}_{12} & {R}_{13} & {t}_{x} \\ {R}_{21} & {R}_{22} & {R}_{23} & {t}_{y} \\ {R}_{31} & {R}_{32} & {R}_{33} & {t}_{z}\end{matrix}\right]}_{Extrinsic} {\left[\begin{matrix}x \\ y \\ z \\ 1\end{matrix}\right]}_{Camera}$ Equation (7) where the extrinsic parameters, *R* = Camera Pitch-Angle and X/Y/Z-Distance from global coordinate system origin

In all of the above embodiments, the processing unit 104 may detect a head position of the vehicle operator 202 relative to the global coordinates system based upon the head pose 112 determined. In some embodiment, an information signal containing information related to the head position detected may be transmitted to a vehicular subsystem through a vehicle network 140. The vehicle network 140 may be wired or wireless. Examples of vehicular subsystems may include a vehicular display system which requires eye-gaze direction of driver for displaying information in line of sight of the driver, or deployment of airbag in the event of vehicle collision, to prevent injuring the vehicle operator during airbag deployment.

### Method 300

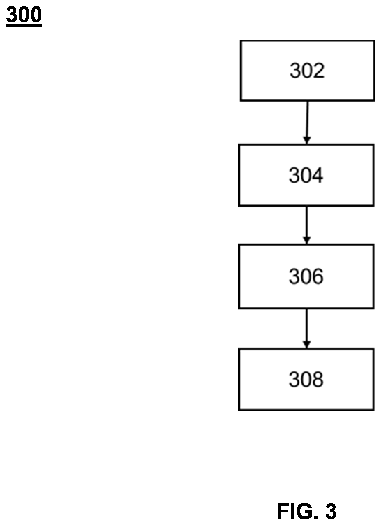

FIG. 3 shows a flowchart of a method 300 for calibrating an imaging device coordinates system with a global coordinate system. At step 302, the method 300 involve aligning at least one physical feature of a vehicle operator to at least one fixed point of a motor vehicle. A suitable physical feature of the vehicle operator may include a head position or an eye gaze.

At step 304, a change in a position of an imaging device mounted on at least a portion of a steering wheel column is determined.

At step 306, the processing unit 104 computes an extrinsic parameter between an imaging device mounted on at least a portion of a steering wheel column of the motor vehicle and at least one fixed point of the motor vehicle aligned with the at least one physical feature of the vehicle operator.

At step 308, the processing unit determines a head coordinate of the vehicle operator relative to a global coordinates system, thereby detecting a head position of the vehicle operator.

The foregoing description shall be interpreted as illustrative and not be limited thereto. One of ordinary skill in the art would understand that certain modifications may come within the scope of this disclosure. Although the different non-limiting embodiments are illustrated as having specific components or steps, the embodiments of this disclosure are not limited to those combinations. Some of the components or features from any of the non-limiting embodiments may be used in combination with features or components from any of the other non-limiting embodiments. For these reasons, the appended claims should be studied to determine the true scope and content of this disclosure.

### LIST OF REFERENCE SIGNS

- 100: System
- 102: Imaging device
- 104: Processing unit
- 106: Memory
- 108: Sensor
- 110: Steering wheel column
- 112: head pose
- 114: Motor vehicle
- 202: Vehicle operator
- 204, 204', 204: At least one fixed point of the motor vehicle 114
- 300: Method
- 302: Align at least one physical feature to at least one fixed point
- 304: determine a change in position of imaging device
- 306: Computing extrinsic parameter between imaging device and at least one fixed point
- 308: Processing unit determines a head coordinate of the vehicle operator relative to a global coordinates system

## Claims

1. A vehicle imaging device calibration system (100) comprising:
an imaging device (102) operable to capture images of a vehicle operator, wherein the imaging device (102) is mounted on at least a portion of a steering wheel column (110) of a motor vehicle;
and
a processing unit (104) having a memory (106), the memory (106) operable to retrieve a set of instructions stored thereon for execution,
**wherein**
the processing unit (104) is operable to:
compute an extrinsic parameter between the imaging device (102) and at least one fixed point of a motor vehicle;
and
determine a head pose of the vehicle operator with respect to a global coordinates system, thereby detecting a head position of the vehicle operator.

2. The system (100) of claim 1, wherein the system (100) comprises a sensor (108) mounted on the steering wheel column (110), the sensor operable to obtain a measurement of a camera pitch of the imaging device (102).

3. The system (100) of claim 1, wherein the processing unit (104) is operable to compute the camera pitch of the imaging device (102) relative to at least one fixed points (204, 204', 204") of the motor vehicle.

4. The system (100) of claim 1 or 3, wherein the processing unit (104) is operable to determine the camera pitch of the imaging device (102) according to an output result to identify a head position of the vehicle operator.

5. The system (100) of claim 4, wherein the head pose to detect the head position of the vehicle operator comprises a head orientation of the head position of the vehicle operator with reference to an imaging device coordinate system.

6. The system (100) of claim 5, wherein the head orientation comprises:
a head yaw of the vehicle operator relative to the at least one fixed point;
a head pitch of the vehicle operator relative to at least one fixed point;
a gaze yaw of the vehicle operator relative to the at least one fixed point;
a gaze pitch of the vehicle operator relative to at least one fixed point, or combination thereof.

7. The system (100) of claims 4-6, wherein the processing unit (104) is operable to:
retrieve one or more historical images captured by the imaging device; and
execute a first set of instructions stored thereon to analyse the head pose information of the vehicle operator relative to the at least one fixed point of the motor vehicle using the one or more historical images retrieved.

8. The system (100) of claim 1, wherein the system (100) comprises an audio device operable to execute an audible instruction based on a command executed by the processing unit (104).

9. The system (100) of claim 8, wherein the audible instruction comprises a sequence of instructions to align the pitch angle of the vehicle operator to the at least one fixed point of the motor vehicle.

10. The system (100) of claim 1, wherein the processing unit (104) is operable to:
retrieve one or more historical images captured by the imaging device; and
execute a second set of instructions stored thereon to generate an average value of a yaw and pitch range of the head orientation of the vehicle operator, relative to the at least one fixed point of the motor vehicle.

11. The system (100) according to any of the preceding claims, wherein the at least one fixed point is selected from a group consisting of a side mirror; a rearview mirror, and combination thereof.

12. A method (300) of calibrating an imaging device coordinates system with a global coordinates system, the method (200) comprising:
(a) aligning (302) at least one physical feature of a vehicle operator to at least one fixed point of a motor vehicle;
(b) determining (304) a change in a position of an imaging device mounted on at least a portion of a steering wheel column;
(c) computing (306), by way of a processing unit, an extrinsic parameter between the imaging device and the at least one fixed point of the motor vehicle aligned with the at least one physical feature of the vehicle operator;
and
(d) determining (308), by way of the processing unit, a head pose of the vehicle operator with respect to a global coordinates system, thereby detecting a head position of the vehicle operator.
